# EUROPEAN PATENT APPLICATION

(11) **EP 2 682 716 A2**
(43) Date of publication of application: **08.01.2014**
(21) Application number: 13174710.7
(22) Date of filing: 02.07.2013
(51) Int. Cl.: G01D 5/14, G01D 5/347

(54) **Encoder and motor device**

(30) Priority: 04.07.2012 JP 2012150125
(71) Applicant: Kabushiki Kaisha Yaskawa Denki, Kitakyushu-shi, Fukuoka 806-0004 (JP)
(72) Inventor: Watanabe, Atsufumi, Kitakyushu-shi, Fukuoka 806-0004 (JP)
(74) Representative: Viering, Jentschura & Partner

(57) **Abstract**

An encoder (100) and a motor device (SM) that can be reduced in size and cost by reducing the number of magnetic field detecting elements are provided. The encoder includes a rotary disc (110), a magnetic detection mechanism to magnetically detect rotation of the rotary disc (110), an optical detection mechanism (131, SL, SA, PD, PA) to optically detect the rotation of the rotary disc (110), an A-phase pulse generator (141) configured to generate an A-phase pulse signal (PH-A) based on an output from the magnetic detection mechanism (MG, 120), a B-phase pulse generator (142) configured to generate a B-phase pulse signal (PH-B) of which a phase is different from the A-phase pulse signal (PH-A) by 90° based on an output from the optical detection mechanism (131, SL, SA, PD, PA), and a counter (143) configured to detect a multiple turning amount of the rotary disc (110) based on the A-phase pulse signal (PH-A) and the B-phase pulse signal (PH-B).

## Description

### Technical Magnetic field

The present invention relates to an encoder and a motor device.

### Background of the Invention

Conventionally, encoders for detecting a multiple turning amount of a rotor have been known. For example, JP4453037B discloses an encoder including an A-phase magnetic field detecting element and a B-phase magnetic field detecting element which detect leakage fluxes of a magnetic material part provided to a rotary disc and output signals of one pulse per rotation, of which phases are 90° different from each other.

The magnetic field detecting elements are implemented on a substrate arranged to oppose to the rotary disc. Generally, magnetic field detecting elements have comparatively large external dimensions and are costly among all the elements implemented on the substrate. Since the encoder disclosed in JP4453037B includes the two magnetic field detecting elements, the substrate becomes larger in scale in order to secure implementation areas for the two magnetic field detecting elements, which produces a bulky encoder, or motor device containing the encoder, and increases manufacturing cost.

### Summary of the Invention

The present invention is made in view of the above situation, and provides a downsized low-cost encoder and motor device with a reduced number of magnetic field detecting elements.

According to one aspect of the invention, an encoder is provided. The encoder includes a rotary disc, a magnetic detection mechanism to magnetically detect rotation of the rotary disc, an optical detection mechanism to optically detect the rotation of the rotary disc, a first detection signal generator configured to generate a first detection signal based on an output from the magnetic detection mechanism, a second detection signal generator configured to generate a second detection signal having a predetermined phase difference from the first detection signal based on an output from the optical detection mechanism, and a multiple turn detector configured to detect a multiple turning amount of the rotary disc based on the first and second detection signals.

The encoder may further include an illumination controller to control a light emitting element of the optical detection mechanism. The illumination controller may control the light emitting element to emit light for a predetermined period of time from a timing at which a level of the first detection signal changes, if a power source for the encoder is switched to a backup power source. The illumination controller may control the light emitting element to stop emitting light after the predetermined period of time is elapsed.

The magnetic detection mechanism may include a magnet rotatable together with the rotary disc, and a magnetic detector configured to detect a magnetic field. The first detection signal generator may include a fixed resistor, and a hysteresis comparator configured to compare an output voltage of the magnetic detector with an output voltage of the fixed resistor to generate the first detection signal.

Further, a direction of a magnetic flux of the magnet may reverse for every rotational angle range of substantially 180° at reversing positions. The reversing positions may correspond to a home position of the rotary disc. The first detection signal generator may be configured to generate the first detection signal having one pulse per rotation of the rotary disc based on the output from the magnetic detection mechanism.

The optical detection mechanism may include a light emitting element to emit light to the rotary disc, an arc-shaped slit provided continuously in the rotary disc throughout a rotational angle range of substantially 180°, and a photoreceiving element to receive light that is emitted from the light emitting element and that is affected by the arc-shaped slit. The second detection signal generator may be configured to generate the second detection signal having one pulse per rotation of the rotary disc based on an output from the photoreceiving element.

The encoder may further include an absolute position signal generator configured to generate an absolute position signal indicating an absolute position of the rotary disc within one rotation. The optical detection mechanism may include a slit array having an absolute pattern and provided in the rotary disc, and a photoreceiving array to receive light that is emitted from the light emitting element and that is affected by the slit array. The absolute position signal generator may be configured to generate the absolute position signal indicating the absolute position of the rotary disc within one rotation based on the output from the photoreceiving array.

The light emitting element may include a point light source. The arc-shaped slit may be provided to reflect light emitted from the light emitting element to the photoreceiving element. The slit array may be provided to reflect light emitted from the light emitting element to the photoreceiving array.

According to another aspect of the invention, a motor device is provided. The motor device includes a motor to rotate a shaft, and an encoder configured to detect a rotational position of the shaft. The encoder includes a rotary disc coupled to the shaft, a magnetic detection mechanism to magnetically detect rotation of the rotary disc, an optical detection mechanism to optically detect the rotation of the rotary disc, a first detection signal generator configured to generate a first detection signal based on an output from the magnetic detection mechanism, a second detection signal generator configured to generate a second detection signal having a predetermined phase difference from the first detection signal based on an output from the optical detection mechanism, and a multiple turn detector configured to detect a multiple turning amount of the rotary disc based on the first and second detection signals.

### Effect of the Invention

As described above, according to the encoder and the motor device of the present invention, the number of the magnetic field detecting elements is reduced and, thus, the size and the cost can be reduced.

### Brief Description of the Drawings

The present disclosure is illustrated by way of example and not by way of limitation in the figures of the accompanying drawings, in which the like reference numerals indicate like elements and in which:

Fig. 1 is a schematic diagram for illustrating a servo system according to one embodiment of the present invention;

Fig. 2 is a schematic diagram for illustrating an encoder according to this embodiment;

Fig. 3 is a schematic diagram for illustrating a disc according to this embodiment;

Fig. 4 is a view for illustrating a positional data generating unit according to this embodiment;

Fig. 5A is a circuit diagram showing one example of an A-phase pulse generator according to the embodiment, and Fig. 5B is a circuit diagram showing one example of a B-phase pulse generator according to the embodiment;

Figs. 6A and 6B are views showing example waveforms of an A-pulse signal and a B-pulse signal under an external power supply according to the embodiment;

Figs. 7A and 7B are views showing example waveforms of the A-phase pulse signal, the B-phase pulse signal, and a power control pulse signal under a backup power supply according to the embodiment; and

Figs. 8A and 8B are views showing example waveforms of the A-phase pulse signal, the B-phase pulse signal, and the power control pulse signal near a home position of the disc according to a comparative example and the embodiment.

### Detailed Description

Hereinafter, one embodiment of the present invention are described in detail with reference to the accompanying drawings.

### < 1. Servo System >

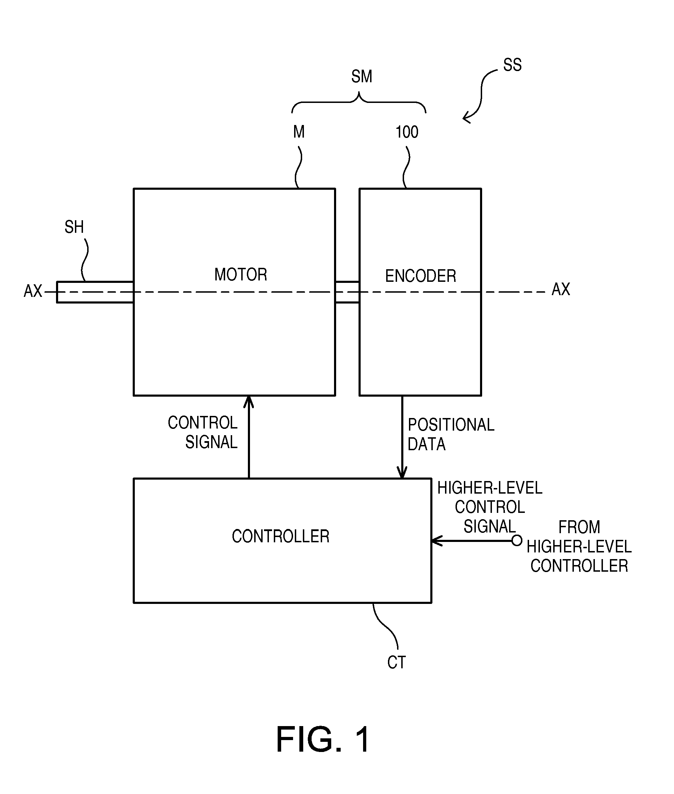

First, a configuration of a servo system according to this embodiment is described with reference to Fig. 1. As shown in Fig. 1, a servo system SS of this embodiment includes a servomotor device SM, and a controller CT. The servomotor device SM includes an encoder 100 and a motor M.

The motor M is one example of a power generating source without the encoder 100. The motor M alone is herein referred to as a "servomotor." In this embodiment, a servomotor assembly including the encoder 100 is referred to as "the servomotor device SM." The servomotor device SM is one example of the motor device. The motor M includes an output shaft SH, and the output shaft SH rotates about a rotation axis AX to output a rotating force or torque. The output shaft SH projects from both ends of the motor M (in left-and-right directions in Fig. 1), and the generated force is mainly outputted to the left end.

Note that the motor M may be, but not particularly limited to, a motor that is controlled based on data, such as positional data, detected by the encoder 100. Moreover, the motor M is not limited to an electric motor using electricity as its power source, but may be a motor using any other power sources, including a hydraulic motor, a pneumatic motor, and a steam-operated motor. However, for the sake of convenience, a case where the motor M is an electric motor is described below.

As shown in Fig. 1, the encoder 100 is coupled to the right end of the output shaft SH of the motor M. The encoder 100 detects a rotational position (i.e., a rotational angle) of the output shaft SH to detect a rotational position (i.e., a rotational angle) of the motor M, and outputs positional data indicating the rotational position of the motor M.

The encoder 100 may detect at least one of a speed (also referred to as a "rotational speed" or an "angular speed") and an acceleration (also referred to as a "rotational acceleration" or an "angular acceleration") of the motor M, in addition to or alternative to the rotational position of the motor M. In this case, the speed and the acceleration of the motor M can be detected, for example, by finding a first-order or second-order derivative of the rotational position with respect to time or counting predetermined detection signals (e.g., incremental signals) for a predetermined period of time. For the sake of convenience, it is assumed below that a physical amount detected by the encoder 100 is the rotational position (i.e., the positional data).

The controller CT acquires the positional data outputted from the encoder 100, and then controls the rotation of the motor M based on the positional data. Therefore, in this embodiment where the electric motor is used as the motor M, the controller CT controls current or voltage applied to the motor M based on the positional data, thereby controlling the rotation of the motor M. Alternatively, the controller CT may also acquire a higher-level control signal from a higher-level controller (not illustrated) and then control the motor M to reach the rotational position indicated by the higher-level control signal. Note that, if the motor M uses other power sources, such as hydraulic, pneumatic, and steam sources, the controller CT can control the rotation of motor M by controlling the supplies from these power sources.

### < 2. Encoder >

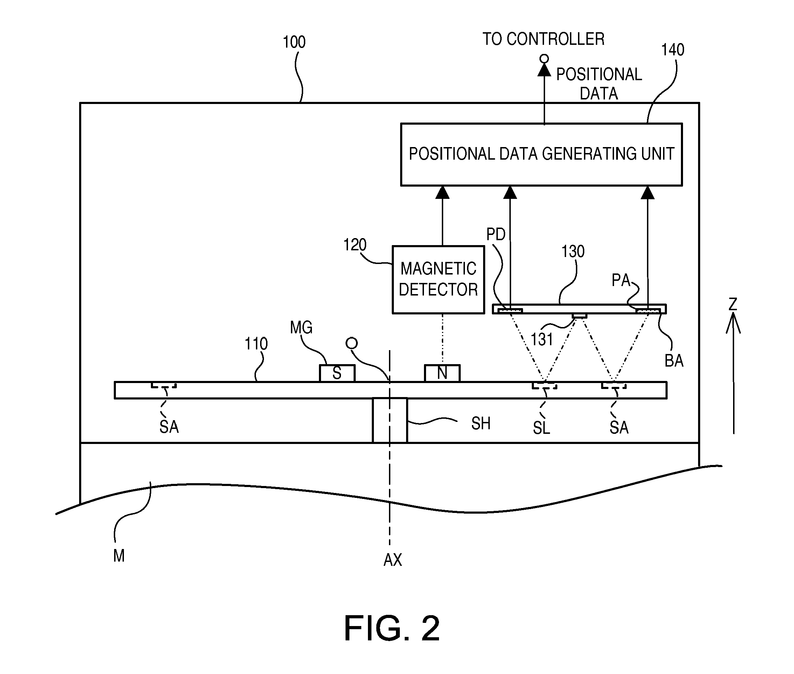

Next, the encoder 100 of this embodiment is described with reference to Figs. 2 to 7. As shown in Fig. 2, the encoder 100 of this embodiment is a so-called reflective encoder, and it includes a disc 110, a magnet MG, a magnetic detector 120, an optical module 130, and a positional data generating unit 140.

In this embodiment, for the sake of convenience of describing the structure of the encoder 100, directions are defined as follows. In Fig. 2, a direction in which the disc 110 faces the optical module 130, in other words, the positive direction of Z-axis, is defined as "up," and the opposite negative direction of the Z-axis is defined as "down." Note that a spatial relation of the components of the encoder 100 of this embodiment is not particularly limited to the up-and-down orientation as described herein (e.g., a horizontal orientation is also possible). Moreover, for the sake of convenience, the orientation in this embodiment complies with the directions defined here unless it is expressly indicated.

### (2-1. Disc)

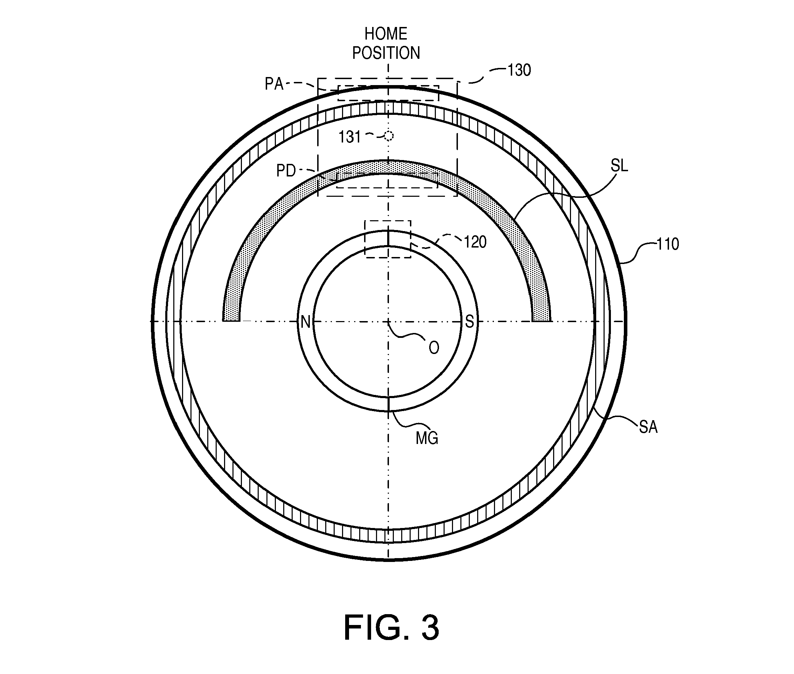

As shown in Fig. 3, the disc 110 is formed in a circular disc shape, and arranged such that the center O of the disc substantially corresponds to a rotation axis AX. The disc 110 is coupled to the output shaft SH of the motor M, and rotated by the rotation of the motor M (i.e., the rotation of the output shaft SH). In this embodiment, the disc 110 is described as one example of a measurement target for measuring the rotation of the motor M; however, an end face of the output shaft SH may be directly used as the measurement target, or other members coupled to the end face may also be used as the measurement target.

As shown in Fig. 3, the disc 110 has the magnet MG and is formed with a slit array SA and a slit SL. Although the disc 110 rotates in response to the operation of the motor M as described above, on the other hand, the magnetic detector 120 and the optical module 130 are fixedly arranged opposing to a part of the disc 110. In other words, the magnet MG, the slit array SA, and the slit SL are arranged to be relatively movable with respect to the magnetic detector 120 and the optical module 130 in a rotating direction (circumferential direction) of the disc 110 by the operation of the motor M.

The magnetic detector 120 is arranged above an upper surface of the disc 110 so as to oppose to a part of the magnet MG, and constitutes a magnetic detection mechanism (described later) together with the magnet MG. The optical module 130 is arranged above the upper surface of the disc 110 so as to oppose to parts of the slit array SA and the slit SL, and constitutes an optical detection mechanism (described later) together with the slit array SA and the slit SL. The magnetic detection mechanism and the optical detection mechanism are described below in detail.

### (2-2. Magnetic Detection Mechanism)

The magnetic detection mechanism magnetically detects the rotation of the disc 110, and includes the magnet MG and the magnetic detector 120. As shown in Fig. 3, the magnet MG is formed in a ring shape centering on the disc center O. The magnet MG is provided on the upper surface of the disc 110, and rotates together with the disc 110. Note that the magnet MG needs not to be in such a ring shape, but may be, for example, in a disc shape. A direction of a magnetic flux on an upper surface of the magnet MG reverses for every predetermined rotational angle range (substantially 180°) of the disc 110. In addition, the magnet MG is arranged such that rotational positions where the magnetic flux reverses correspond to a home position of the disc 110 which is used in detecting an absolute position of the disc 110.

As shown in Figs. 2 and 3, the magnetic detector 120 is fixed in parallel to the disc 110 so as to oppose to the part of the magnet MG at the home position, and detects the direction of the magnetic flux on the upper surface of the magnet MG. The magnetic detector 120 is implemented on a substrate (not illustrated). The magnetic detector 120 and the optical module 130 may be implemented on the same substrate. As described above, since the direction of the magnetic flux on the upper surface of the magnet MG reverses every time the disc 110 turns by 180°, the magnetic detector 120 detects the direction of the magnetic flux which changes for one cycle as the disc 110 revolves once. This detection signal is outputted to the positional data generating unit 140 where it is used for a detection of a multiple turning amount indicating the number of rotations of the disc 110 from a predetermined reference position. The detection of such a multiple turning amount is particularly effective, for example, when detecting the rotational position of the output shaft at the time of reboot, even if the output shaft is rotated due to some kind of influences after a power shutdown and a backup power is then supplied after the power shutdown.

The magnetic detector 120 is not particularly limited as long as it has a configuration that can detect the direction of the magnetic flux. For example, a magnetic resistive element, such as an MR (Magneto Resistive effect) element, a GMR (Giant Magneto Resistive effect) element, or a TMR (Tunnel Magneto Resistive effect) element may also be used as the magnetic detector 120. Alternatively, the rotation of the disc 110 can also be detected using a magnetic field detecting element, such as a Hall element, to detect intensities of the magnetic field in two axial directions perpendicular to the rotation axis AX, and then calculate a direction of the magnetic field of the magnet MG based on the detection signals.

### (2-3. Optical Detection Mechanism)

The optical detection mechanism optically detects the rotation of the disc 110. The optical detection mechanism includes the optical module 130, and is formed with the slit array SA and the slit SL. The slit array SA is formed as a track arranged in a ring shape centering on the disc center O on the upper surface of the disc 110. The slit array SA includes a plurality of reflective slits (not illustrated) arrayed throughout the track in its circumferential direction. Each reflective slit reflects light emitted from a light source 131. The plurality of reflective slits are arranged all around the disc 110 to have an absolute pattern in the circumferential direction, and have a groove shape.

Note that the absolute pattern means such a pattern that, for example, positions or a ratio of the reflective slits within a predetermined angle range, which oppose to a photoreceiving array provided to the optical module 130 (described later), can be uniquely defined within one rotation of the disc 110. That is, when the motor M is at a certain rotational position x, a detection result of each one of the plurality of photoreceiving elements of the photoreceiving array shows either one of "light received" or "no light received," and a combination of the detection results (a bit pattern of ON and OFF based on the detections) uniquely defines an absolute value of that rotational position x (absolute position). Various algorithms can be used as a method of generating the absolute pattern as long as a generated pattern indicates the absolute position of the motor M one-dimensionally with bits corresponding to the number of the photoreceiving elements of the photoreceiving array.

As shown in Fig. 3, the slit SL is an arc-shaped slit formed centering on the disc center O in the upper surface of the disc 110. Unlike the slit array SA described above where the plurality of reflective slits are arrayed in the circumferential direction, the slit SL is formed to be a single reflective slit which is continuous for the rotational angle range of substantially 180°. The single reflective slit has a groove shape. The angle range centers on the home position. That is, the slit SL is formed such that its both ends are located at symmetrical rotational positions, and each end is offset from the home position of the disc 110 (the rotational positions where the flux of the magnet MG reverses) by substantially 90°.

The disc 110 is made of glass in this embodiment, and the reflective slits of the slit array SA can be formed by applying a light reflecting material on the surface of the glass-made disc 110. Note that the material of the disc 110 is not limited to glass, but may also be a metal or a resin. Alternatively, for example, the disc 110 may be made of a highly reflective metal, and a part of the disc 110 other than the reflective slits may be formed as a non-reflective part or a lowered reflectance part by sputtering the part of the disc 110 to roughen or applying a low-reflective material to the part of the disc 110. Note that the material and the manufacturing method of the disc 110 are not particularly limited to these.

As shown in Figs. 2 and 3, the optical module 130 is formed as a single substrate BA and is fixed in parallel to the disc 110 to be able to oppose to a part of the slit array SA and a part of the slit SL of the disc 110. Therefore, the optical module 130 can relatively move in the circumferential direction with respect to the slit array SA and the slit SL corresponding to the rotation of the disc 110. Note that, in this embodiment, a case is described where the optical module 130 is configured as the substrate which allows the encoder 100 to be thinner and easily manufactured; however, the optical module 130 is not necessarily configured as the substrate.

On the other hand, as shown in Figs. 2 to 4, the optical module 130 includes the light source 131, a photoreceiving array PA, and a photoreceiving element PD on a lower surface of the substrate BA (i.e., a surface on the negative direction side of the Z-axis), in other words, the surface of the substrate BA opposing to the disc 110. The light source 131 emits light to the parts of the slit array SA and the slit SL that pass through the positions opposing to the light source 131.

The light source 131 is not particularly limited as long as it is a light source that can emit light into a predetermined irradiation area, and an LED (Light Emitting Diode) may be used, for example. The light source 131 is formed specifically as a point light source without any optical lenses, and emits diffusion light from its light emitting part. Needless to say, the point light source used herein does not necessarily be strictly a "point light" source, and as long as it is a light source where diffusion light can be emitted from a substantial point location in terms of design and operation principles, light may be emitted from a limited surface. By using such a point light source, the light source 131 can emit diffusion light to the parts of the slit array SA and the slit SL that pass through the opposing positions, regardless of influences thereon to some extent, such as a change in light intensity due to a positional deviation of the slit array SA and the slit SL from a light axis of the light source 131 and attenuation of the light due to a difference in optical path length. Thus, the light source 131 can emit light to these parts substantially uniformly. In addition, since focusing and diffusion of the light are not conducted by using any optical elements, for example, errors due to the optical elements are not easily caused, and the straightness of the irradiation light to the slit array SA and the slit SL can be improved. Note that the light source 131 is one example of the light emitting element in the claims.

The photoreceiving array PA is arranged near the light source 131, and receives light affected by the slit array SA opposing thereto (here, reflection light). For this reason, the photoreceiving array PA has a plurality of photoreceiving elements (not illustrated). Similarly, the photoreceiving element PD is also arranged near the light source 131. The photoreceiving element PD receives light affected by the slit SL opposing thereto (here, reflection light) when the disc 110 is within the rotational angle range where the slit SL is formed, and does not receive light outside the rotational angle range. Unlike to the photoreceiving array PA having the plurality of photoreceiving elements, the photoreceiving element PD is configured to be a single photoreceiving element.

A photodiode may be used as each of the photoreceiving elements. However, the photoreceiving element is not limited to the photodiode, but may be any element as long as it can receive light emitted from the light source 131 and convert it into an electric signal.

### (2-4. Positional Data Generating Unit)

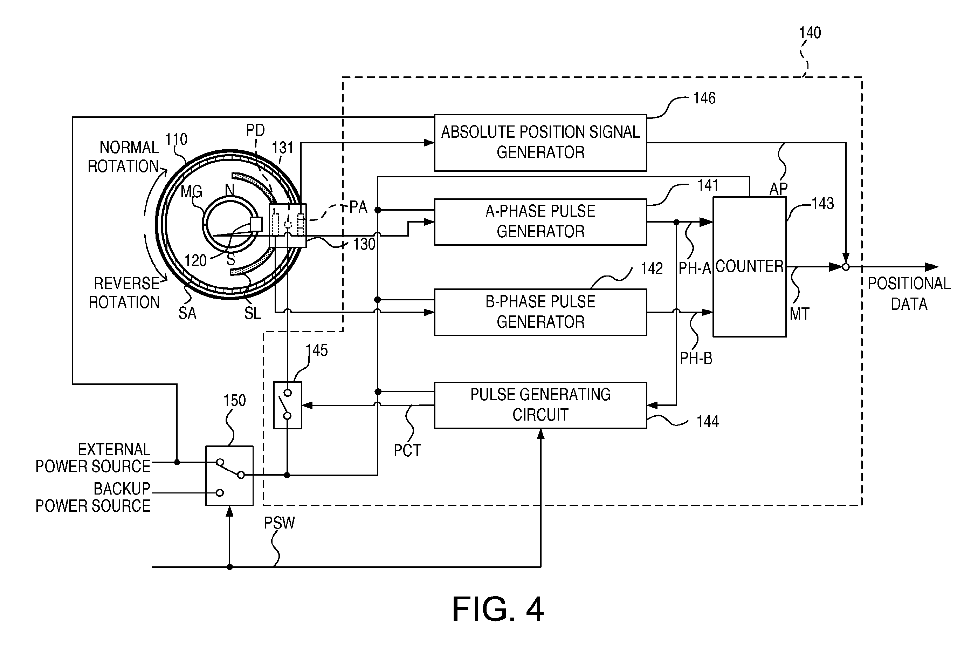

As shown in Fig. 4, the positional data generating unit 140 includes an A-phase pulse generator 141, a B-phase pulse generator 142, a counter 143, a pulse generating circuit 144, and a power supply controller 145, and an absolute position signal generator 146.

The A-phase pulse generator 141 detects the signal from the magnetic detector 120 provided in the magnetic detection mechanism, and converts the signal into a square wave signal to generate an A-phase pulse signal "PH-A." Since the direction of the flux of the magnet MG reverses for every rotational angle range of substantially 180° as described above, the A-phase pulse signal PH-A is a signal of one pulse per rotation of the disc with a duty ratio of 50%. Further, since the rotational position where the flux of the magnet MG reverses is substantially in agreement with the home position of the disc 110 as described above, a rising or falling edge of the A-phase pulse signal is substantially in agreement with an optically zero address of an absolute position signal generated by the absolute position signal generator 146 based on an output from the photoreceiving array PA. Note that the A-phase pulse generator 141 is one example of the first detection signal generator in the claims, and the A-phase pulse signal PH-A is one example of the first detection signal in the claims.

The B-phase pulse generator 142 detects the signal from the photoreceiving element PD provided in the optical detection mechanism, and converts the signal into a square wave signal to generate a B-phase pulse signal "PH-B." Since the slit SL is continuously formed in the disc 110 for the rotational angle range of substantially 180° as described above, the B-phase pulse signal PH-B is a signal of one pulse per rotation of the disc with a duty ratio of 50%. Moreover, since the slit SL is formed such that its both ends are arranged to be offset from the home position of the disc 110 (rotational positions where the flux of the magnet MG reverses) by substantially 90° as described above, the A-phase pulse signal PH-A and the B-phase pulse signal PH-B are two-phase signals of which phases differ from each other by 90°. Note that the B-phase pulse generator 142 is one example of the second detection signal generator in the claims, and the B-phase pulse signal PH-B is one example of the second detection signal in the claims.

The counter 143 counts the multiple turning amount of the disc 110 based on the A-phase pulse signal PH-A and the B-phase pulse signal PH-B, and outputs it as a multiple turn signal "MT." The specific counting method is described later in detail. Note that the counter 143 is one example of the multiple turn detector in the claims.

When the power source is switched from an external power source to a backup power source by a power source switch 150 and a level of the A-phase pulse signal PH-A is changed while the power is supplied from the backup power source, the pulse generating circuit 144 generates a power source control pulse signal "PWC" having a predetermined pulse width from the rising or falling edge of the A-phase pulse signal PH-A, and outputs it to the power supply controller 145. The power supply controller 145 turns itself ON and OFF based on the power source control pulse signal PWC outputted from the pulse generating circuit 144, and supplies a pulsed backup power to the light source 131. In this manner, the light source 131 emits light only for a predetermined period of time corresponding to the pulse width, starting from the rising or falling edge of the A-phase pulse signal PH-A, and, after that, the illumination of the light source 131 is cut off. The predetermined time period is preferably a time length which is sufficient for the counter 143 to detect the level of the B-phase pulse signal PH-B. Note that the pulse generating circuit 144 is one example of the illumination controller in the claims.

The absolute position signal generator 146 generates an absolute position signal "AP" indicating an absolute position of the disc 110 (or the motor M) within one rotation based on the output from the photoreceiving array PA. Specifically, in the plurality of photoreceiving elements of the photoreceiving array PA, each detection result ("light received" or "no light received") is treated in the form of a bit, and the absolute position x is represented by a plurality of bits. Thus, each light reception signal outputted from each of the plurality of photoreceiving elements is treated independently from each other in the absolute position signal generator 146. Therefore, the absolute position x encrypted (encoded) into a serial bit pattern is decoded from the combination of the outputted light reception signals to generate the absolute position signal AP. The absolute position signal AP is synthesized with the multiple turn signal MT outputted from the counter 143, and the positional data generating unit 140 then outputs this positional data.

In this example, the power source switch 150 is configured as a switching element which switches based on a power source switching signal "PWS" acquired from a detection circuit (not illustrated). When the power source switch 150 switches to the external power source side, the external power is supplied to the A-phase pulse generator 141, the B-phase pulse generator 142, the counter 143, the pulse generating circuit 144, and the absolute position signal generator 146. On the other hand, when the supply of the external power is cut off due to a power-off, blackout or the like, the power source switch 150 switches to the backup power supply side based on the power supply change signal PWS. In this manner, the power supply to the absolute position signal generator 146 is cut off, but the A-phase pulse generator 141, the B-phase generator 142, the counter 143, and the pulse generating circuit 144 are supplied with the backup power.

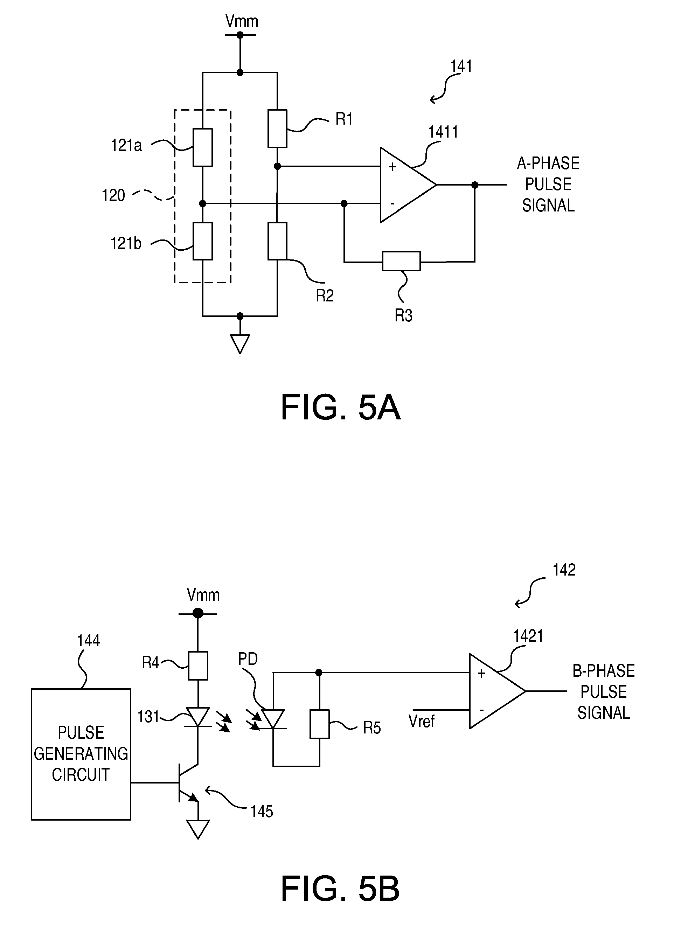

Fig. 5A shows one example of an electric circuit of the A-phase pulse generator 141. In this example, the magnetic detector 120 is configured as a magnetic resistive element. A voltage at a connection point between two resistance lines 121a and 121b of the magnetic detector 120, and a voltage at a connection point between two fixed resistors R1 and R2 are inputted to a comparator 1411 provided to the A-phase pulse generator 141. The comparator 1411 is configured as a hysteresis comparator with a negative feedback from a resistor R3. The comparator 1411 compares the two voltages and then outputs the A-phase pulse signal PH-A.

Fig. 5B shows one example of a drive circuit of the light source 131 and an electric circuit of the B-phase pulse generator 142. In this example, the drive circuit of the light source 131 has a resistor R4 and the power supply controller 145 which is configured as a transistor. The switching of the power supply controller 145 is controlled by a gate signal from the pulse generating circuit 144. The output circuit of the photoreceiving element PD has a resistor R5, and an output voltage therefrom and a comparative reference voltage Vref are inputted into a comparator 1421 provided to the B-phase pulse generator 142. The comparator 1421 compares the two voltages and then outputs the B-phase pulse signal PH-B.

### (2-5. Operation of Encoder)

Next, the operation of the encoder 100 is described. First, the operation when the external power is supplied is described. Returning to Fig. 4, when the disc 110 rotates, the magnet MG rotates together with the disc 110. The magnetic detector 120 detects the direction of the flux of the magnet MG, and outputs the detection signal to the A-phase pulse generator 141. Meanwhile, under the external power supply, the power supply controller 145 stays ON, and the external power is always supplied to the light source 131. The photoreceiving element PD outputs a light reception signal to the B-phase pulse generator 142 based on the existence of the reflection light from the slit SL according to the irradiation of light from the light source 131. The A-phase pulse generator 141 and the B-phase pulse generator 142 amplify and convert the inputted signal into the square wave signal, respectively, and output to the counter 143 the generated A-phase pulse signal PH-A and the generated B-phase pulse signal PH-B of which phases are different from each other by 90°.

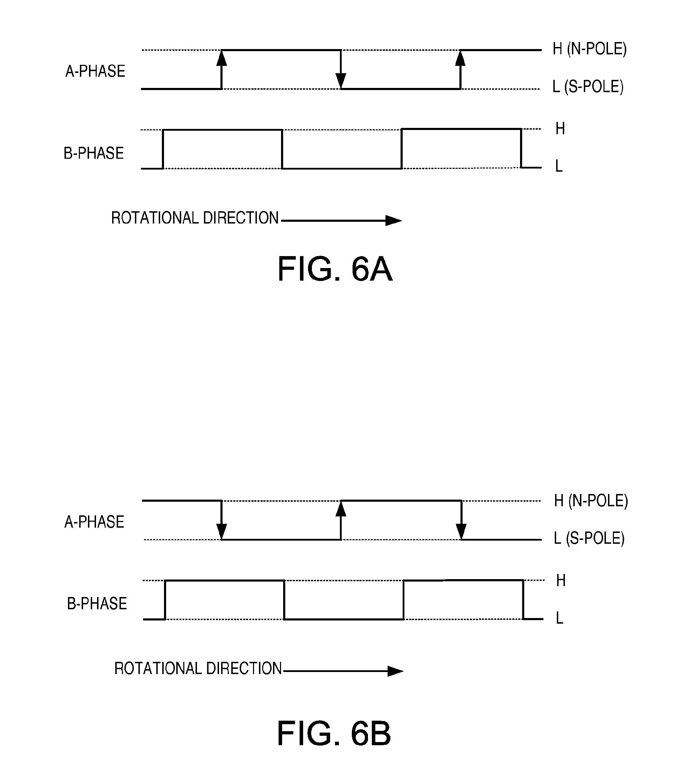

Figs. 6A and 6B show example waveforms of the A-phase pulse signal PH-A and the B-phase pulse signal PH-B at this time. Fig. 6A shows the waveforms under a normal rotation, and Fig. 6B shows the waveforms under a reverse rotation. Note that, in these examples, it is assumed that the A-phase pulse signal PH-A reaches a level of "High (H)" when the magnetic pole of the magnet MG is N, and it reaches a level of "Low (L)" when the magnetic pole is S. In addition, as shown in Fig. 4, it is assumed that a clockwise rotation of the disc 110 is defined as the normal rotation, and a counterclockwise rotation as the reverse rotation. Under the normal rotation, as shown in Fig. 6A, the A-phase pulse signal PH-A reaches its rising edge and the B-phase pulse signal PH-B is at the "High" level when the home position of the disc 110 passes through the position corresponding to the magnetic detector 120 and the photoreceiving element PD. In this case, the counter 143 adds one (1) to the multiple turning amount data to increment the multiple turning amount. On the other hand, at the falling edge of the A-phase pulse signal PH-A where the B-phase pulse signal PH-B is at the "Low" level, the count is not carried out since the disc 110 is not at the home position.

Under the reverse rotation, as shown in Fig. 6B, the A-phase pulse signal PH-A reaches the falling edge and the B-phase pulse signal PH-B is at the "High" level when the home position of the disc 110 passes through the position corresponding to the magnetic detector 120 and the photoreceiving element PD. In this case, the counter 143 subtracts one (1) from the multiple turning amount data to decrement the multiple turning amount. On the other hand, at the rising edge of the A-phase pulse signal PH-A where the B-phase pulse signal PH-B is at the "Low" level, the count is not carried out since the disc 110 is not at the home position. The counter 143 outputs the multiple turning amount data counted as above, as the multiple turn signal MT.

Note that the counting method described above is merely an example in the case of the configuration of this embodiment, and it is not limited to this. For example, when the magnetic poles (N-pole and S-pole) of the magnet MG are located at reversed positions from the positions shown in Figs. 3 and 4 (i.e., shifted by 180°), or when the magnetic detector 120 is oriented at the rotational position which is shifted from the home position by 180°, the relation of the normal rotation and the reverse rotation will be revered from the above. In other words, Fig. 6B would show the waveform under the normal rotation, and Fig. 6A would show the waveform under the reverse rotation. Alternatively, for example, in a case where the slit SL is formed in the disc 110 on the opposite side of the home position or in a case where the photoreceiving element PD is arranged at a rotational position offset from the home position by 180°, the B-phase pulse signal PH-B will be at the "Low" level when the home position of the disc 110 passes through the position corresponding to the magnetic detector 120 and the photoreceiving element PD. Thus, the counting method of the multiple turning amount by the counter 143 is suitably changed according to the configuration, such as the positions of the magnetic poles of the magnet MG, the formation position of the slit SL, and the arranging positions of the magnetic detector 120 and the photoreceiving element PD.

On the other hand, the photoreceiving array PA receives light emitted from the light source 131 and reflected on the slit array SA, and then outputs the light reception signal to the absolute position signal generator 146. The absolute position signal generator 146 generates the absolute position signal AP indicating the absolute position of the disc 110 within one rotation based on the inputted signals. When the external power is supplied to the encoder 100 as described above, the power is supplied to all the circuits of the positional data generating unit 140, and the positional data generating unit 140 continuously outputs the positional data which is obtained by synthesizing the multiple turn signal MT outputted from the counter 143 and the absolute position signal AP outputted from the absolute position signal generator 146.

Next, the operation of the encoder 100 when the external power source is cut off and the power is supplied from the backup power source is described. In Fig. 4, when the external power falls below a predetermined voltage, for example, due to a power-off or blackout, the power source switch 150 switches to the backup power source side based on the power source switching signal PWS from the detection circuit (not illustrated). When switched to the backup power source, the power is not supplied to the absolute position signal generator 146, but the backup power is supplied to the A-phase pulse generator 141, the B-phase pulse generator 142, the counter 143, and the pulse generating circuit 144. Further, when the pulse generating circuit 144 detects the rising or falling edge of the A-phase pulse signal PH-A, it generates the power source control pulse signal PWC having the predetermined pulse width which is generated from the timing of the rising or falling edge, and supplies pulsed power to the light source 131 via the power supply controller 145.

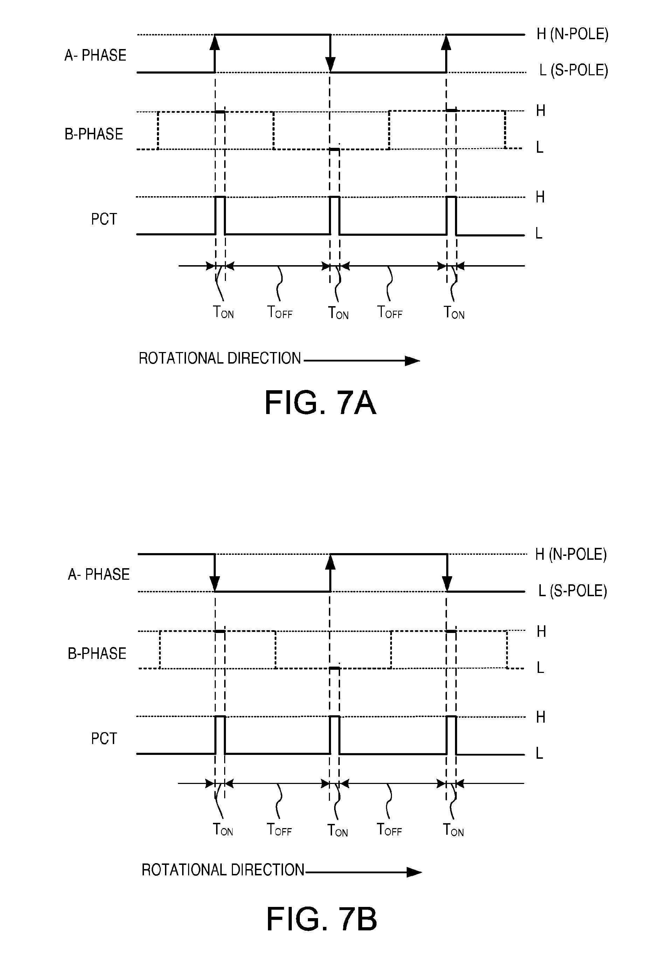

Figs. 7A and 7B show example waveforms of the A-phase pulse signal PH-A, the B-phase pulse signal PH-B, and the power source control pulse signal PWC. Fig. 7A shows the waveforms under the normal rotation, and Fig. 7B shows the waveforms under the reverse rotation. During a T_{ON} period in which the power source control pulse signal PWC is at a "High" level, the backup power is supplied to the light source 131, and during a T_{OFF} period in which the power source control pulse signal PWC is at a "Low" level, the backup power is not supplied to the light source 131. Therefore, the B-phase pulse signal PH-B is generated by the B-phase pulse generator 142 only during the T_{ON} period indicated by solid lines in Figs. 7A and 7B.

When the counter 143 detects the rising or falling edge of the A-phase pulse signal PH-A, it then detects the level of the B-phase pulse signal PH-B during the T_{ON} period, and counts the multiple turning amount. The counting method is similar to the case described above in the case of the external power supply. That is, under the normal rotation, as shown in Fig. 7A, the counter 143 adds one (1) to the multiple turning amount data to increment the multiple turning amount when the A-phase pulse signal PH-A is at the rising edge and the B-phase pulse signal PH-B is at the "High" level. On the other hand, under the reverse rotation, as shown in Fig. 7B, the counter 143 subtracts one (1) from the multiple turning amount data to decrement the multiple turning amount when the A-phase pulse signal PH-A is at the falling edge and the B-phase pulse signal PH-B is at the "High" level. Note that the T_{ON} period is set so that it has the shortest time width within a range where the counter 143 can detect the level of the B-phase pulse signal PH-B (the parts indicated by the solid lines in Figs. 7A and 7B) for reducing a power consumption of the backup power.

On the other hand, the absolute position signal AP is not generated since the backup power is not supplied to the absolute position signal generator 146. Therefore, the positional data generating unit 140 outputs the multiple turn signal MT outputted from the counter 143 as the positional data. Note that the multiple turning data may be stored in a memory (not illustrated) or the like under the backup power supply, and when switched from the backup power source to the external power source, the positional data generating unit 140 reads the multiple turning amount data from the memory, synthesizes the data with the absolute position signal AP, and then outputs the positional data.

### < 3. Example Effects according to the Embodiment >

The description is given above about the encoder 100 and other components according to one embodiment of the present invention. Next, example effects of this encoder 100 are described.

As described above, the encoder 100 has the magnetic detection mechanism for magnetically detecting the rotation of the disc 110, and the optical detection mechanism for optically detecting the rotation of the disc 110. Based on these outputs, the A-phase pulse generator 141 and the B-phase pulse generator 142 generate the A-phase pulse signal PH-A and the B-phase pulse signal PH-B of which phases are different by 90° corresponding to the rotation of the disc 110, respectively. The counter 143 then detects the multiple turning amount of the disc 110 based on the A-phase pulse signal PH-A and the B-phase pulse signal PH-B.

With this configuration, it is necessary to provide only one magnetic detector 120 to obtain the two-phase signal, instead of providing two magnetic detectors 120. Thus, the number of the magnetic detectors 120 which is a costly component with large external dimensions can be reduced. As a result, since the substrate (not illustrated) onto which the magnetic detector 120 is implemented can be reduced in size, the encoder 100 can also be reduced in size, as well as the servomotor device SM. In addition, since the cost of the components can be reduced, the encoder 100 and the servomotor device SM can be reduced in cost as well.

Further, particularly in this embodiment, when the disc 110 rotates under the power supply from the backup power source and the level of the A-phase pulse signal PH-A is changed, the pulse generating circuit 144 generates the power source control pulse signal PWC having the predetermined pulse width from the rising or falling edge of the A-phase pulse signal PH-A to supply the pulsed backup power to the light source 131. In this manner, the light source 131 emits light for the predetermined time period from the edge, and, after that, the light source 131 is turned off. Since the time length at this time will be sufficient if it has a time width during which the counter 143 can detect the level of the B-phase pulse signal PH-B, a power supply period of time to the light source 131 which consumes a large amount of current can be shortened significantly. Therefore, the life of the backup power source can be extended.

Moreover, particularly in this embodiment, the A-phase pulse generator 141 compares the voltage from the magnetic detector 120 with the voltages from the fixed resistors R1 and R2 by using the hysteresis comparator 1411, and then outputs the A-phase pulse signal PH-A. In this manner, chattering (repetition of ON and OFF of the pulse) at the rising or falling edge of the A-phase pulse signal PH-A can be prevented. Therefore, it can be prevented that the light source 131 is frequently turned on (and off) to reduce the power consumption. Further, it can be prevented that the comparator 1411 is actuated by a slight voltage difference caused by, for example, noises, becoming unstable. Therefore, an effect of preventing a pulse split of the A-phase pulse signal PH-A generated by the A-phase generator 141 can also be attained.

Further, particularly in this embodiment, the detection of the multiple turning amount and the detection of the absolute position are performed using the irradiation light from the common light source 131. In this manner, for example, the light source 131 and the drive circuit thereof can be used commonly for both the absolute position detection and the multiple turning amount detection. Therefore, reductions in size and cost can be achieved compared to the case where, for example, the light source and the drive circuit are independently provided for respective detections.

Further, particularly in this embodiment, the magnet MG is arranged such that the rotational positions where the direction of the magnetic flux reverses correspond to the home position used for the absolute position detection of the disc 110. In this manner, the rising or falling edge of the A-phase pulse signal PH-A generated by the A-phase pulse generator 141 corresponds to the home position. Effects thus attained are described below using a comparative example.

For example, the following configuration (the comparative example) can be considered as a configuration for detecting a multiple turning amount of the disc 110 based on an A-phase signal obtained by a magnetic detection and a B-phase signal obtained by an optical detection. That is, this configuration is such that an arc-shaped slit SL is formed in the disc 110 for a rotational angle range of substantially 180° so that its ends correspond to the home position, and a magnetic body is provided near the home position for a predetermined rotational angle range. A magnetic detector 120 and a photoreceiving element PD are arranged at the home position of the disc 110. In this case, the rising or falling edge of the B-phase pulse signal PH-B generated by the B-phase pulse generator 142 corresponds to the home position.

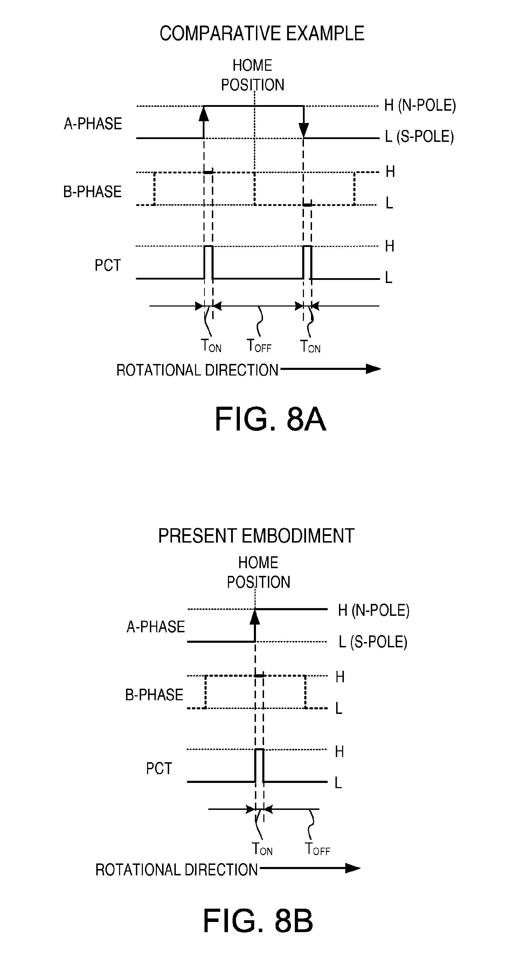

Figs. 8A and 8B show example waveforms of the A-phase pulse signal PH-A, the B-phase pulse signal PH-B, and the power source control pulse signal PWC under the backup power supply. Fig. 8A shows the waveforms in the comparative example, and Fig. 8B shows the waveforms of this embodiment. Note that Figs. 8A and 8B both show the waveforms in the case of the normal rotation. Under the normal rotation, when the magnetic detector 120 detects one of ends of the magnetic body, as shown in Fig. 8A, the A-phase pulse signal PH-A reaches its rising edge, the light source 131 emits light for the predetermined time period similar to this embodiment, and the level of the B-phase pulse signal PH-B is detected to be "High." Then, when the home position of the disc 110 passes through the position corresponding to the magnetic detector 120 and the photoreceiving element PD, the magnetic detector 120 detects the other end of the magnetic body. Then, the A-phase pulse signal PH-A reaches its falling edge, and the level of the B-phase pulse signal PH-B is detected to be "Low." Thus, the counter 143 adds the count of the multiple turning amount by one (1) when it detects that the level of the B-phase signal is changed from "High" to "Low," because it can be considered that the home position has passed the position corresponding to the magnetic detector 120 and the photoreceiving element PD by the normal rotation of the disc 110. Although the illustration is omitted, a case under the reverse rotation is similar. That is, the counter 143 reduces the count of the multiple turning amount by one (1) when the counter 143 detects that the level of the B-phase signal is changed from "Low" to "High" when both the edges of the A-phase pulse signal PH-A are detected, because it can be considered that the home position has passed the position corresponding to the magnetic detector 120 and the photoreceiving element PD by the reverse rotation of the disc 110. Thus, in this comparative example, the light source 131 is required to emit light twice to detect the passing of the home position in both the cases of the normal rotation and the reverse rotation.

On the other hand, in this embodiment, as shown in Fig. 8B, the rising or falling edge of the A-phase pulse signal PH-A corresponds to the home position. Therefore, when the counter 143 detects that the B-phase pulse signal PH-B is at the "High" level and the A-phase pulse signal PH-A is at the rising edge, it adds the count of the multiple turning amount by one (1) because it can be considered that the home position has passed the position corresponding to the magnetic detector 120 and the photoreceiving element PD by the normal rotation of the disc 110. Although the illustration is omitted, a case under the reverse rotation is similar. That is, the counter 143 reduces the count of the multiple turning amount by one (1) when it detects that the level of the B-phase signal PH-B is at the "High" level and the A-phase pulse signal PH-A is at the falling edge, because it can be considered that the home position has passed the position corresponding to the magnetic detector 120 and the photoreceiving element PD by the reverse rotation of the disc 110. Thus, in this embodiment, the detection of the home position passing the position corresponding to the magnetic detector 120 and the photoreceiving element PD is performed by a single time of illumination of light from the light source 131 in both the cases of the normal rotation and the reverse rotation.

Therefore, in this embodiment, even in a case where the magnetic detector 120 and the photoreceiving element PD move back and forth near the home position of the disc (more than the rotational angle range of the comparative example with the magnetic body), for example, due to fluctuation of the disc 110, the number of illumination of the light source 131 can be reduced down to one half (1/2) of the comparative example. In this manner, the power consumption can be significantly reduced and the life of the backup power source can be extended.

### < 4. Modifications >

One embodiment of the present invention is described above in detail with reference to the accompanying drawings. However, the appended claims are not limited to the embodiment described herein. It is apparent that those skilled in the art can reach that various changes, modifications, and combinations can be made without departing from the scope of invention described in the claims. Therefore, it can be appreciated that techniques or the arts after any of the changes, modifications, and combinations is made also fall under the scope of the invention. Hereinafter, modifications of the above embodiment are described. Note that, in the following description, similar components to the above embodiment are denoted with the same reference numerals and the description thereof is suitably omitted.

For example, the case where the so-called reflective encoder, in which the photoreceiving array PA and the photoreceiving element PD are arranged on the same side as the light source 131 with respect to the disc 110, is used is described above; however, it is not limited to this. Specifically, a so-called transmissive encoder may also be used, in which the photoreceiving array PA and the photoreceiving element PD are arranged on the opposite side to the light source 131 with respect to the disc 110. In this case, the slit array SA and the slit SL may be formed as transmissive holes in the rotary disc 110, or the part of the rotary disc 110 other than the slit array SA and the slit SL may be made in a roughen surface, for example, by sputtering, or the part may be applied with a low-reflective material. Namely, the term "slit" is defined as a portion provided in a rotary disc to conduct light emitted from a light emitting element to a photoreceiving element. The slit provided in the rotary disc includes a reflective groove, an opening, or other structure to conduct light emitted from the light emitting element to the photoreceiving element.

Note that, if using such a transmissive encoder as the encoder, there arises the following disadvantages compared to the reflective type. First, since the light source 131 and the photoreceiving element PD are arranged on both sides of the disc 110, the dimension in the axial direction increases. Further, for example, an optical lens for producing parallel light, and holders for holding the light source 131 and the photoreceiving element PD which are separately arranged will be required and, thus, the number of components will increase and the structure will be complicated. Moreover, although extremely high positional accuracy is required between the light source 131 and the photoreceiving array PA, the positional accuracy may be degraded by the separated arrangement and this may negatively affect to the performance of the encoder. On the other hand, such problems do not arise with the reflective encoder. Further, with the reflective encoder, since all the components requiring the high positional accuracy, such as the light source 131, the photoreceiving array PA, the photoreceiving element PD, and the magnetic detector 120, can be arranged on the same side of the disc 110, it is possible to implement and assemble all the components on/to the same substrate. In this case, the positional accuracy of the components can easily be secured and, further, other various effects, such as a downsizing, a structural simplification, and an improvement in assembly, can be obtained. Thus, it is preferred to use the reflective encoder as described in the above embodiment.

Moreover, since the point light source for emitting diffusion light can be used when using the reflective encoder as the encoder, it has following advantages compared to the transmissive encoder. With the transmissive encoder, since an irradiation area is limited because it uses parallel light, it may be required to provide light sources at two locations to emit light respectively to the slit array SA used for the absolute position detection and the slit SL used for the multiple turning amount detection. In this case, not only the two light sources are required, but also the number of other components increases, such as connecting components of the light sources with the substrate of the optical module (e.g., flexible connectors), and supporting holders of the light sources. Therefore, the structure becomes complicated and the area of the substrate increases because two light emitting circuits for the two light sources are required. On the other hand, by using the point light source as the above embodiment, since the irradiation area can be increased by diffusion light, light can be emitted substantially uniformly to the respective parts of the slit array SA and the slit SL with a single light source. Therefore, since only one light source is used, the following effects can be attained compared to the transmissive encoder: (1) the number of components can be reduced; (2) the area of the substrate can be reduced; (3) downsizing; (4) a structural simplification; and (5) a cost reduction.

Further, although it is not provided in the above embodiment, a plurality of reflective slits having an incremental pattern in the circumferential direction may be formed in the disc 110. The incremental pattern is a pattern of the slit arrangement where each slit pattern is regularly repeated at a predetermined pitch. The incremental pattern is different from the absolute pattern where detection or non-detection by each of the plurality of photoreceiving elements represents the absolute position x as a bit, and it represents the rotational position of the motor M for every pitch or within one pitch by using a sum of detection signals of at least more than one photoreceiving elements. Therefore, although the incremental pattern does not indicate the absolute position x of the motor M, but it can indicate the position of the motor M with high accuracy compared to the absolute pattern.

## Claims

1. An encoder (100) comprising:
a rotary disc (110);
a magnetic detection mechanism (MG, 120) to magnetically detect rotation of the rotary disc (110);
an optical detection mechanism (131, SL, SA, PD, PA) to optically detect the rotation of the rotary disc (110);
a first detection signal generator (141) configured to generate a first detection signal (PH-A) based on an output from the magnetic detection mechanism (MG, 120);
a second detection signal generator (142) configured to generate a second detection signal (PH-B) having a predetermined phase difference from the first detection signal (PH-A) based on an output from the optical detection mechanism (131, SL, SA, PD, PA); and
a multiple turn detector (143) configured to detect a multiple turning amount of the rotary disc (110) based on the first and second detection signals (PH-A, PH-B).

2. The encoder (100) of Claim 1, further comprising:
an illumination controller (144) to control a light emitting element (131) of the optical detection mechanism (131, SL, SA, PD, PA),
wherein the illumination controller (144) controls the light emitting element (131) to emit light for a predetermined period of time from a timing at which a level of the first detection signal (PH-A) changes, if a power source for the encoder (100) is switched to a backup power source, and
wherein the illumination controller (144) controls the light emitting element (131) to stop emitting light after the predetermined period of time is elapsed.

3. The encoder (100) of Claim 1 or 2,
wherein the magnetic detection mechanism (MG, 120) includes
a magnet (MG) rotatable together with the rotary disc (110), and
a magnetic detector (120) configured to detect a magnetic field, and
wherein the first detection signal generator (141) includes
a fixed resistor (R1, R2), and
a hysteresis comparator (1411) configured to compare an output voltage of the magnetic detector (120) with an output voltage of the fixed resistor to generate the first detection signal (PH-A).

4. The encoder (100) of Claim 3,
wherein a direction of a magnetic flux of the magnet (MG) reverses for every rotational angle range of substantially 180° at reversing positions,
wherein the reversing positions correspond to a home position of the rotary disc (110),
and
wherein the first detection signal generator (141) is configured to generate the first detection signal (PH-A) having one pulse per rotation of the rotary disc (110) based on the output from the magnetic detection mechanism (MG, 120).

5. The encoder (100) of any one of the Claims 1 to 4,
wherein the optical detection mechanism (131, SL, SA, PD, PA) includes
a light emitting element (131) to emit light to the rotary disc (110),
an arc-shaped slit (SL) provided continuously in the rotary disc (110) throughout a rotational angle range of substantially 180°, and
a photoreceiving element (PD) to receive light that is emitted from the light emitting element (131) and that is affected by the arc-shaped slit (SL),
wherein the second detection signal generator (142) is configured to generate the second detection signal (PH-B) having one pulse per rotation of the rotary disc (110) based on an output from the photoreceiving element (PD).

6. The encoder (100) of any one of the Claims 1 to 5, further comprising:
an absolute position signal generator (146) configured to generate an absolute position signal (AP) indicating an absolute position (x) of the rotary disc (110) within one rotation,
wherein the optical detection mechanism (131, SL, SA, PD, PA) includes
a slit array (SA) having an absolute pattern and provided in the rotary disc (110), and
a photoreceiving array (PA) to receive light that is emitted from the light emitting element (131) and that is affected by the slit array (SA),
wherein the absolute position signal generator (146) is configured to generate the absolute position signal (AP) indicating the absolute position (x) of the rotary disc (110) within one rotation based on the output from the photoreceiving array (PA).

7. The encoder (100) of Claim 6,
wherein the light emitting element (131) comprises a point light source,
wherein the arc-shaped slit (SL) is provided to reflect light emitted from the light emitting element (131) to the photoreceiving element (PD), and
wherein the slit array (SA) is provided to reflect light emitted from the light emitting element (131) to the photoreceiving array (PA).

8. A motor device (SM) comprising:
a motor (M) to rotate a shaft (SH); and
an encoder (100) according to any one of the claims 1 to 7, wherein the rotary disc (110) of the encoder (100) is coupled to the shaft (SH) and the encoder (100) is configured to detect a rotational position of the shaft (SH).
